# FASCICULE DE BREVET EUROPEEN

(11) **EP 0 989 362 B1**
(45) Date de publication et mention de la délivrance du brevet: **23.07.2003**
(21) Numéro de dépôt: 99402279.6
(22) Date de dépôt: 17.09.1999
(51) Int. Cl.: F23D 14/32

(54) **Procédé de chauffage d'un four**
Verfahren zum Beheizen eines Ofens
Process to heat a furnace

(30) Priorité: 22.09.1998 FR 9811798
(43) Date de publication de la demande: 29.03.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Legiret, Thierry, 78117 Toussus le Noble (FR); Le Gouefflec, Gérard, 78114 Magny les Hameaux (FR); Borissoff, Thierry, 78990 Elancourt (FR); Charon, Olivier, Chicago, Illinois 60611 (US)
(74) Mandataire: Vesin, Jacques

(56) Documents cités:
- GB-A- 1 514 842
- GB-A- 2 046 415
- US-A- 4 931 013
- PATENT ABSTRACTS OF JAPAN vol. 098, no. 003, 27 février 1998 (1998-02-27) & JP 09 303728 A (MIYAMOTO KOGYOSHO:KK), 28 novembre 1997 (1997-11-28)
- PATENT ABSTRACTS OF JAPAN vol. 097, no. 002, 28 février 1997 (1997-02-28) -& JP 08 277406 A (NIPPON STEEL CORP), 22 octobre 1996 (1996-10-22)
- PATENT ABSTRACTS OF JAPAN vol. 017, no. 108 (C-1032), 5 mars 1993 (1993-03-05) -& JP 04 293740 A (DAIDO STEEL CO LTD), 19 octobre 1992 (1992-10-19)

## Description

L'invention est relative à un procédé de chauffage d'un four comprenant au moins un brûleur susceptible de fonctionner avec un comburant dont la teneur en oxygène peut varier. De tels brûleurs, décrits par exemple par les documents EP-192.682 et EP-432.153, sont adaptés à diverses situations.

La majorité des fours industriels comme des fours de fusion ou des fours de recuit sont équipés de brûleurs fonctionnant avec de l'air comme comburant.

Dans chaque application de ces brûleurs, on choisit un comburant déterminé, par exemple constitué d'air enrichi d'oxygène, la teneur en oxygène du comburant étant maintenue constante en fonctionnement.

Le document GB-A-1.514.842 décrit un procédé dans lequel de l'oxygène est périodiquement ajouté à l'air comburant pour faire fondre des charges successives de ferrailles dans un four; après quoi on coupe l'alimentation en oxygène et on exécute l'affinage avec uniquement de l'air comme comburant. Il s'agit donc d'un brûleur conventionnel « dopé » par de l'oxygène dans la flamme, ce document n'envisageant pas l'utilisation d'oxygène pur.

Le document US-A-4.931.013 enseigne la mise en oeuvre d'un brûleur « dopé » par une lance à oxygène pur dont l'injection dans l'air de combustion enrichit sa teneur en oxygène jusqu'à 35%. Ainsi dans une première phase on brûle complètement des hydrocarbures grâce à ce « dopage » à l'oxygène, puis l'injection d'oxygène pur est coupée et le processus se poursuit avec seulement de l'air enrichi en oxygène.

Le Patents Abstracts of Japan vol.098 n° 003 du 27.02.1998 (JP-09-30728) est relatif à une méthode de crémation dans laquelle au cours d'une première phase, un brûleur conventionnel est mis en oeuvre ; dans une seconde phase afin de pouvoir procéder à la crémation d'articles difficiles à brûler, on utilise en outre une lance qui injecte sur ceux-ci, à l'extérieur du brûleur, un mélange d'air et d'oxygène.

Dans tous ces procédés connus, l'alimentation en air n'est jamais coupée, et la teneur du comburant en oxygène n'excède jamais 35%.

Or, en fonction des fours et des applications particulières considérées de ceux-ci, et de considérations relatives aux performances thermiques et au coût de fonctionnement, il peut s'avérer avantageux de pouvoir moduler la teneur en oxygène dans un domaine beaucoup plus large que 21 à 35%. En effet, une teneur de 21% d'oxygène est celle de l'air, comburant non coûteux mais dont les performances thermiques sont modestes. Inversement un comburant constitué d'oxygène à peu près pur est très performant, mais onéreux. Or les brûleurs connus selon l'état de la technique ne permettent pas une telle optimisation relative des performances thermiques par rapport au coût économique.

L'invention vise donc à proposer un procédé de chauffage optimisé et économique pour l'ensemble des applications des brûleurs en question.

A cet effet, l'invention a pour objet un procédé de chauffage d'un four comprenant au moins un brûleur susceptible de fonctionner avec un comburant dont la teneur en oxygène peut varier, caractérisé en ce que :
a) dans une première période (P1) on alimente le brûleur en oxygène sensiblement pur afin de fournir un apport énergétique de chauffage élevé,
b) dans une seconde période (P2) on alimente le brûleur par un comburant dont la teneur en oxygène varie entre sensiblement 100% et 21% en fonction de considérations relatives aux performances thermiques recherchées et aux coûts de mise en oeuvre de ce comburant,
c) et dans une troisième période (P3) on alimente le brûleur par un comburant dont la teneur en oxygène est minimale, et qui correspond à une période de veille ne nécessitant qu'un faible apport énergétique de chauffage.

Suivant d'autres caractéristiques de l'invention :
- pendant la seconde période on injecte séparément dans le brûleur, d'une part de l'oxygène pur et d'autre part de l'air,
- pendant la troisième période on injecte dans le brûleur uniquement de l'air,
- ladite première période nécessitant un apport énergétique de chauffage élevé correspond à un chauffage intense y compris le cas d'une période de fusion,
- pour un four à chargement par lot, ladite première période correspond à la montée en température du produit. Pour un four continu cette première période correspond à une cadence de production élevée, c'est à dire à une exigence de chauffage importante,
- on règle les débits de combustible et de l'air à un niveau tel que la puissance de chauffage dudit au moins un brûleur est à peu près 50 à 60% de la puissance nominale du brûleur pendant la première période.

D'autres particularités et avantages de l'invention ressortiront de la description suivante, donnée à titre d'exemple, sans caractère limitatif, en regard des dessins annexés sur lesquels :
La figure 1 montre une vue en coupe d'un brûleur fonctionnant avec des comburants différents dont la teneur en oxygène est comprise entre environ 21% et pratiquement 100% en moles, et
La figure 2 montre un graphique illustrant un cycle de conduite pour chauffer un four de fusion selon le procédé de l'invention.

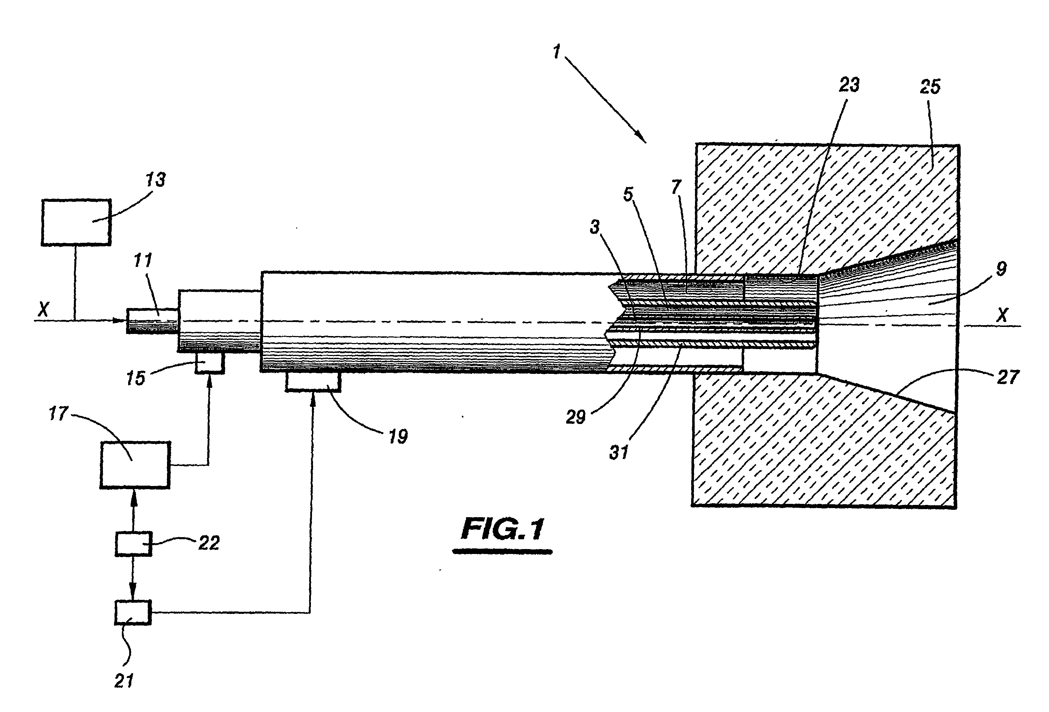

La figure 1 représente un brûleur 1 fonctionnant avec des comburants différents dont la teneur en oxygène est comprise entre environ 21% et pratiquement 100% en moles et destiné à être installé dans un four, notamment un four à verre, un four rotatif de fusion de fonte ou un four de recuit.

Ce brûleur 1 comprend trois conduits 3, 5 et 7 d'amenée de gaz dans un ouvreau 9 qui débouche dans une zone de combustion d'un four non représenté. Ces trois conduits 3, 5 et 7 sont disposés concentriquement autour d'un axe X-X du brûleur 1.

Le conduit 3 est relié par son extrémité 11 d'entrée de gaz à un organe 13 de régulation de débit d'un combustible tel que par exemple le gaz naturel.

Le conduit annulaire intermédiaire 5 comprend une extrémité d'entrée 15 reliée à un organe 17 de régulation de débit d'oxygène pratiquement pur, c'est-à-dire d'un comburant dont la teneur en oxygène excède 90% en moles environ.

Le conduit annulaire périphérique 7 comporte une entrée 19 d'air. Ce conduit 7 est alimenté par un organe 21 de régulation de débit d'air.

En outre, les organes 17 et 21 de régulation sont raccordés à une unité 22 de commande permettant d'alterner entre un fonctionnement avec de l'air comme comburant et un fonctionnement avec de l'oxygène pratiquement pur comme comburant.

Par ailleurs, l'extrémité avant du brûleur 1 est introduite dans un passage cylindrique 23 d'un bloc 25 en matériau réfractaire. Le passage 23 du bloc 25 débouche dans un passage évasé, constituant l'ouvreau 9, qui s'ouvre en direction de la zone de combustion.

Les extrémités de sortie du brûleur sont formées d'une part par le passage 23 réalisé dans le bloc 25, et d'autre part par deux tubes, un tube central 29 et un tube intermédiaire 31, réalisés par exemple en acier réfractaire afin de résister à la chaleur développée par le processus de combustion.

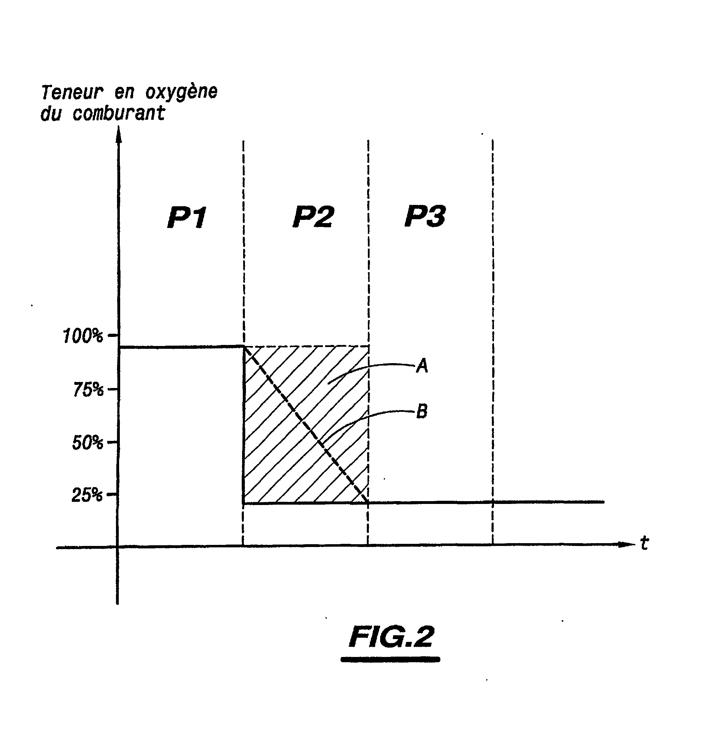

On décrira ci-après en détail le procédé selon l'invention en regard de la figure 2, qui représente un graphique illustrant un cycle de conduite d'un four de fusion équipé d'un ou de plusieurs brûleurs tels que celui décrit ci-dessus.

Ce graphique présente en abscisses le temps t et en ordonnées la teneur en oxygène du comburant en moles.

De plus, on y a représenté trois périodes P1, P2, et P3 correspondant respectivement à différentes étapes de fonctionnement du four.

La période P1 correspond à une étape de fusion, nécessitant un apport énergétique de chauffage élevé. Pendant cette période le brûleur est alimenté en oxygène sensiblement pur comme comburant, avec éventuellement addition d'une faible quantité d'air.

Durant la seconde période P2 on alimente le brûleur par un comburant dont la teneur en oxygène varie entre sensiblement 100% et 21%, dans la zone A, par exemple suivant la droite B donnée à titre d'exemple non limitatif. En effet cette variation peut être optimisée en continu, selon les applications, en fonction de considérations de performances thermiques et de coût de mise en oeuvre du comburant, pour réaliser l'affinage de la charge du four. Ainsi pendant la seconde période P2, le brûleur est alimenté par un mélange d'air et d'oxygène pur dont la teneur est réglée en continu.

Durant la troisième période P3, la teneur en oxygène est minimale, le brûleur étant alimenté majoritairement en air dont la teneur en oxygène est de 21%. Cette troisième période P3 correspond par exemple à une période de veille du four (nuit, week-end), durant laquelle sa production est arrêtée mais le four doit être maintenu à température appropriée.

Ainsi, l'oxygène qui est plus onéreux que l'air comme comburant n'est utilisé qu'à des moments utiles, c'est-à-dire lorsque la puissance à fournir au four doit être élevée, ce qui permet d'optimiser son fonctionnement.

Pendant la période de veille P3, on peut régler les débits de combustible et de l'air à un niveau tel que la puissance de chauffage du brûleur 1 soit par exemple au maximum 50 à 60 % de la puissance nominale du brûleur.

On comprend donc que ce procédé permet d'optimiser très avantageusement l'utilisation de l'oxygène dans la mise en oeuvre d'un four, en permettant de faire varier sa teneur dans le comburant dans une plage continue entre 21% et 100%, en fonction du coût et des performances recherchées.

Ce procédé s'applique non seulement aux fours de fusion de verre, mais aussi à des fours de rotatif de fusion de fonte, à des fours de recuit ou analogues.

Pour un four à chargement continu, la zone nécessitant un apport énergétique de chauffage élevé correspond à celle où a lieu la montée en température du produit. De tels fours sont par exemple des fours de recuit, de réchauffage de forge, ou encore des fours de fusion de verre.

## Revendications

1. Procédé de chauffage d'un four comprenant au moins un brûleur susceptible de fonctionner avec un comburant dont la teneur en oxygène peut varier, **caractérisé en ce que** :
a) dans une première période (P1) on alimente le brûleur en oxygène sensiblement pur afin de fournir un apport énergétique de chauffage élevé,
b) dans une seconde période (P2) on alimente le brûleur par un comburant dont la teneur en oxygène varie entre sensiblement 100% et 21% en fonction de considérations relatives aux performances thermiques recherchées et aux coûts de mise en oeuvre de ce comburant,
c) et dans une troisième période (P3) on alimente le brûleur par un comburant dont la teneur en oxygène est minimale, et qui correspond à une période de veille ne nécessitant qu'un faible apport énergétique de chauffage.

2. Procédé selon la revendication 1, **caractérisé en ce que** pendant la seconde période on injecte séparément dans le brûleur, d'une part de l'oxygène pur et d'autre part de l'air.

3. Procédé selon la revendication 2, **caractérisé en ce que** durant la troisième période on injecte dans le brûleur majoritairement de l'air.

4. Procédé selon l'une des revendications 1 à 3 pour un four de fusion, **caractérisé en ce que** ladite première période (P1) nécessitant un apport énergétique de chauffage élevé correspond à un chauffage intense y compris le cas d'une période de fusion.

5. Procédé selon l'une des revendications 1 à 4, pour un four à chargement par lot, **caractérisé en ce que** ladite première période (P1) nécessitant un apport énergétique de chauffage élevé correspond à la montée en température du produit.

6. Procédé selon l'une des revendications 1 à 3, pour un four continu, **caractérisé en ce que** ladite première période (P1) nécessitant un apport énergétique de chauffage élevé correspond à une cadence de production élevée, c'est à dire à une exigence de chauffage importante.

7. Procédé selon l'une quelconque des revendications 1 à 6, **caractérisé en ce que** pour ladite seconde période (P2), on règle les débits du combustible et de l'air à un niveau tel que la puissance de chauffage dudit brûleur (1) est à peu près 50 à 60% de la puissance nominale du brûleur (1).

## Patentansprüche

1. Verfahren zum Beheizen eines Ofens mit mindestens einem Brenner, der mit einem Oxidationsmittel betrieben werden kann, dessen Sauerstoffgehalt variieren kann, **dadurch gekennzeichnet, dass** man
a) während einer ersten Phase (P1) den Brenner mit im Wesentlichen reinem Sauerstoff versorgt, um eine große Heizenergiezufuhr zu liefern;
b) während einer zweiten Phase (P2) den Brenner mit einem Oxidationsmittel versorgt, dessen Sauerstoffgehalt in Abhängigkeit von den gewünschten thermischen Leistungen und den Betriebskosten dieses Oxidationsmittels zwischen im Wesentlichen 100% und 21% variiert; und
c) während einer dritten Phase (P3) den Brenner mit einem Oxidationsmittel versorgt, dessen Sauerstoffgehalt minimal ist, und die einer Bereitschaftsphase entspricht, während der nur eine geringe Heizenergiezufuhr erforderlich ist.

2. Verfahren nach Anspruch 1, **dadurch gekennzeichnet, dass** man während der zweiten Phase einerseits reinen Sauerstoff und andererseits Luft getrennt in den Brenner einleitet.

3. Verfahren nach Anspruch 2, **dadurch gekennzeichnet, dass** man während der dritten Phase hauptsächlich Luft in den Brenner einleitet.

4. Verfahren nach einem der Ansprüche 1 bis 3 für einen Schmelzofen, **dadurch gekennzeichnet, dass** die erste Phase (P1), die eine erhöhte Heizenergiezufuhr erfordert, einem intensiven Beheizen, einschließlich der Schmelzphase, entspricht.

5. Verfahren nach einem der Ansprüche 1 bis 4 für einen chargenweise beschickten Ofen, **dadurch gekennzeichnet, dass** die erste Phase (P1), die eine erhöhte Heizenergiezufuhr benötigt, der Temperaturerhöhung des Produktes entspricht.

6. Verfahren nach einem der Ansprüche 1 bis 3 für einen Durchlaufofen, **dadurch gekennzeichnet, dass** die erste Phase (P1), die eine erhöhte Heizenergiezufuhr erfordert, einer erhöhten Produktionsrate, das heißt einem großen Heizerfordernis, entspricht.

7. Verfahren nach einem der Ansprüche 1 bis 6, **dadurch gekennzeichnet, dass** man für den zweiten Zeitraum (P2) den Brennstoff- und den Luftdurchsatz auf eine solche Höhe einstellt, dass die Heizleistung des Brenners (1) ungefähr 50 bis 60% der Nennleistung des Brenners (1) entspricht.

## Claims

1. Method of heating a furnace, comprising at least one burner capable of operating with an oxidizer whose oxygen content may vary, **characterized in that**:
a) in a first period (P1), the burner is fed with substantially pure oxygen so as to deliver a high heating energy influx;
b) in a second period (P2), the burner is fed with an oxidizer whose oxygen content varies between approximately 100% and 21% depending on considerations relating to the desired thermal performance and to the costs of using this oxidizer; and
c) in a third period (P3), the burner is fed with an oxidizer whose oxygen content is minimal, this corresponding to a standby period requiring only a low heating energy influx.

2. Method according to Claim 1, **characterized in that**, on the one hand, pure oxygen and, on the other hand, air are injected separately into the burner during the second period.

3. Method according to Claim 2, **characterized in that** predominantly air is injected into the burner during the third period.

4. Method according to one of Claims 1 to 3, for a melting furnace, **characterized in that** the said first period (P1) requiring a high heating energy influx corresponds to intensive heating including the case of a melting period.

5. Method according to one of Claims 1 to 4 for a batch charging furnace, **characterized in that** the said first period (P1) requiring a high heating energy influx corresponds to the temperature rise of the product.

6. Method according to one. of Claims 1 to 3 for a continuous furnace, **characterized in that** the said first period (P1) requiring a high heating energy influx corresponds to a high production rate, that is to say to a high heating demand.

7. Method according to any one of Claims 1 to 6; **characterized in that** the flow rates of the fuel and of the air for the said second period (P2) are adjusted to a level such that the heating power of the said burner (1) is approximately 50 to 60% of the nominal power of the burner (1).
